# EUROPEAN PATENT APPLICATION

(11) **EP 2 402 215 A1**
(43) Date of publication of application: **04.01.2012**
(21) Application number: 11445003.4
(22) Date of filing: 28.06.2011
(51) Int. Cl.: B60R 9/04, B60R 9/048

(54) **Load surface element**

(30) Priority: 29.06.2010 SE 1000696
(71) Applicant: Nyberg, Henrik, 184 50 Åkersberga (SE)
(72) Inventor: Nyberg, Henrik, 184 50 Åkersberga (SE)
(74) Representative: Eriksson, Kjell

(57) **Abstract**

The present invention relates to a load surface element intended to be mounted on load arches on a vehicle, whereby the load surface element comprises a planar bottom part (1) that comprises at least one folded-up edge (3) in the longitudinal direction of the load surface element which direction generally coincides with the direction of travel of the vehicle and which load surface element is provided with openings.

The load surface element according to the present invention is distinguished in that the bottom part (1) is provided with compound openings (10, 11, 12) and that the compound openings (10, 11, 12) comprise at least two partial openings (10A, 10B, 11A, 11B, 12A, 12B) with different widths (B1, B2) .

## Description

### Technical area of the invention

The present invention relates to a load surface element intended to be mounted on load arches that are tightened fast on a vehicle roof, whereby the load surface element comprises a planar bottom part that is provided with openings. The presented embodiment of a load surface element is intended to form a load surface together with another load surface element. The bottom part preferably comprises at least one folded-up edge in the longitudinal direction of the load surface element which edge generally coincides with the vehicle's direction of travel.

### State of the art

A load surface is previously known from DE29520547U that is intended to be mounted on a car roof. The load surface has folded-down, longitudinal edges for mounting on the car roof. Rectangular holes are taken up in the load surface for running through or fastening tightening members, e.g., straps. The load surface can be divided in the longitudinal direction or in the transverse direction.

A load surface is previously known from AT341351 that is intended to be mounted on a car roof. The load surface comprises slits in two directions that are at right angles to one another and in which slits holder elements can be mounted, whereby the holder elements are provided with a plate on the bottom of the load surface.

### The purpose and characteristics of the invention

A primary purpose of the present invention is to indicate a load surface of the initially defined type whereby the openings taken up in the load surface element are especially designed for facilitating the use of clamps for fastening objects that are placed on the load surface.

Another purpose of the present invention is to design the load surface in such a manner that it becomes easy to manage for the user.

Yet another purpose of the present invention is to make the load surface element from a material that presents sufficient bearing capacity at the same time that it has the lowest possible weight.

At least the primary purpose of the present invention is realized by means of a load surface element that has the characteristics indicated in the following independent claim 1. Preferred embodiments of the invention are defined in the dependent claims.

### Brief description of the drawings

A preferred embodiment of the invention will be described below with reference made to the attached drawings, in which:
Fig. 1 shows a perspective view of a load surface element in accordance with the present invention;
Fig. 2 shows a top view of the load surface element according to fig. 1; and
Fig. 3 shows a perspective view of a load surface element in accordance with the present invention, whereby an elongated object is clamped fast on the load surface by clamps.

### Detailed description of a preferred embodiment of the invention

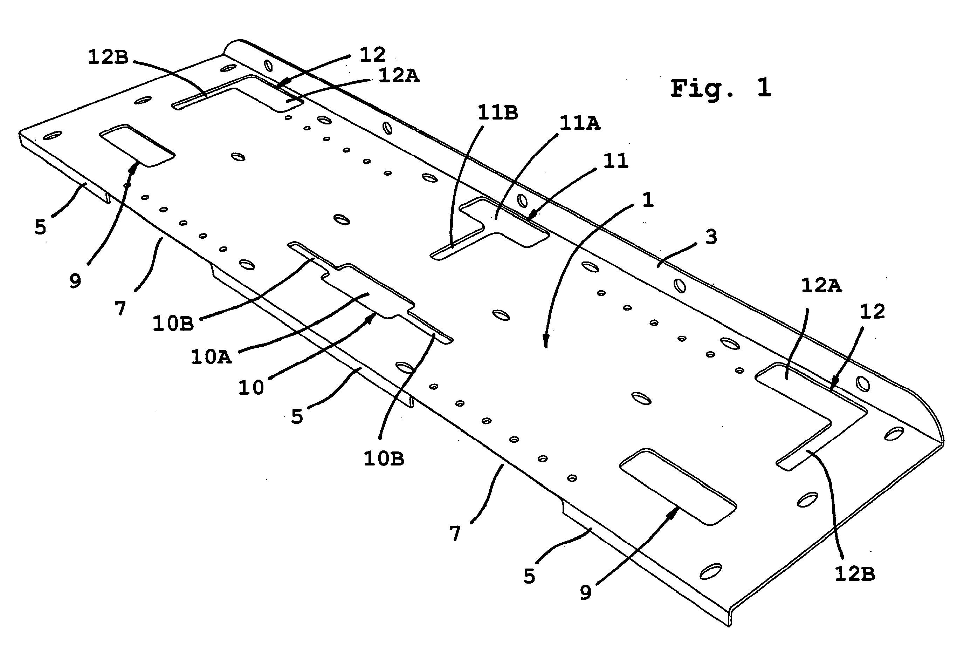

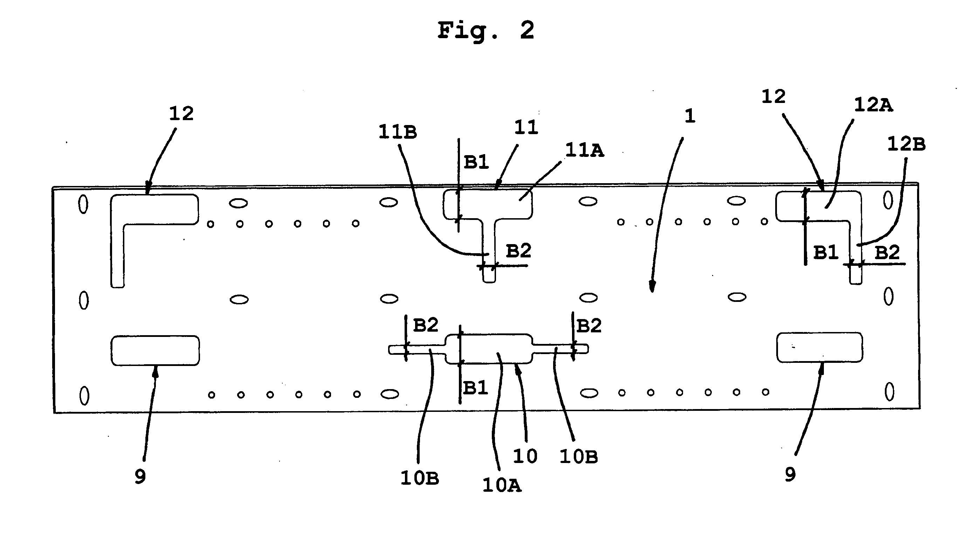

The load surface element shown in fig. 1 and 2 comprises a planar bottom part 1, a first longitudinal, continuous edge part 3 as well as a number of other longitudinal edge parts 5. As is most apparent from fig. 1, the first longitudinal edge part 3 is folded up. The other longitudinal edge parts 5 are folded down. As is most apparent from fig. 1, the other edge parts 5 are three in number and are arranged at a distance from each other, as a result of which intermediate spaces 7 are formed in which load arches (not shown) are intended to be taken up.

The load surface element according to the present invention is preferably manufactured from aluminium with a thickness of a magnitude of 3-6 mm.

The planar bottom part 1 is provided with a number of round or oval holes of different sizes and with a different configuration, whereby this hole configuration can vary and is therefore not significant for the present invention. These holes are used, among other things, for fastening the load surface element tightly on the load arches as well as for placing straps or the like in order to lash the load located on the load surface element.

The planar bottom part 1 also comprises a number of openings 9, 10, 11, 12. In the embodiment shown two of openings 9 are generally rectangular and located close to the folded-down edge parts 5. The other openings 10, 11, 12 are composed by rectangular partial openings with different sizes, whereby the partial openings merge into each other so that a continuous opening is formed.

A first compound opening 10 is located close to the intermediate, folded-down edge part 5, whereby the first compound opening 10 comprises a central, rectangular first partial opening 10A as well as two rectangular other partial openings 10B connected to the first partial opening 10A on both its sides. Generally, the first partial opening 10 is larger than the other partial openings 10B. According to the embodiment shown the first partial opening 10A has a width B1 which according to the invention can be circa 3-5 times width B2 of the other partial openings 10B whose longitudinal directions coincide with each other. According to the embodiment shown the other partial openings 10B are connected to the first partial opening 10A centrally on the opposing short sides of the first partial opening 10A.

A second compound opening 11 is located close to an intermediate part of the folded-up edge part 3. The second compound opening 11 comprises a third rectangular partial opening 11A and a forth rectangular partial opening 11B, whereby the third partial opening 11A is generally greater than the fourth partial opening 11B. According to the embodiment shown the third partial development 11A has a width B1 that according to the invention can be 3-5 times the width B2 of the fourth partial opening 11B. According to the embodiment shown the fourth partial opening 11B is connected to the third partial opening 11A centrally on the one longitudinal side of the third partial opening 11A. Generally, the second compound opening 11 is T-shaped.

Two third compound openings 12 are located in the area of two of the corners of the load surface element, close to the respective ends of the folded-up edge part 3. The third composed openings 12 comprise a fifth partial rectangular opening 12A and a sixth rectangular partial opening 12B, whereby the fifth partial opening 12A is generally larger than the sixth partial opening 12B. According to the presented embodiment the fifth partial opening 12A has a width B1 that according to the invention can be 3-5 times the width B2 of the sixth partial opening 12B. According to the presented embodiment an end part of the sixth partial opening 12B is close to an end part of the fifth partial opening 12A. Generally, the third compound opening 12 is L-shaped.

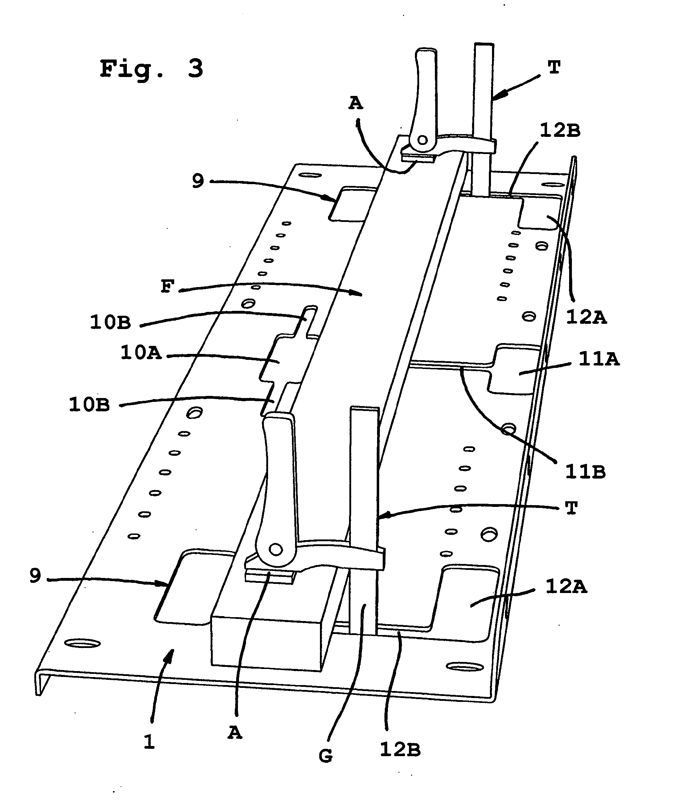

Fig. 3 shows how a longitudinal object F is clamped fast on the load surface element in accordance with the present invention. The clamping fast of the longitudinal object F takes place by means of two clamps T that are preferably so-called quick clamps. During the placing of the quick clamps the one stop (not shown) of the quick clamp T is transferred to the bottom of the load surface element via the fifth partial opening 12A, i.e., the fifth partial opening 12A is sufficiently large to allow the passage of the one stop of quick clamp T. Then, a slide bar G is moved into the sixth partial opening 12B to the quick clamp T, whereby the sixth partial opening 12B has such a small width B2 that the stop located on the bottom of the load surface element can not pass through the sixth partial opening 12B. The stop located at quick clamp T located on the bottom of the load surface element can thus be brought to rest against the bottom of the load surface element in the area of the sixth partial opening 12B without the stop being able to pass through the sixth partial opening 12B. The other stop A at rapid clamp T and located on the top of the load surface element can be placed resting against the longitudinal object F that is to be clamped fast on the load surface element in accordance with the present invention. Then, the quick clamps are activated in such a manner that a clamping fast of the object F takes place.

Of course, even the other compound openings 10 and 11 can be used in a corresponding manner in order to clamp objects fast on the load surface element.

### Conceivable modifications of the invention

The above-described embodiment of a load surface element constitutes half of a load surface that is mounted on load arches on a vehicle, i.e., two load surface elements that were described above are assembled together, whereby the assembly takes place along the edge parts 5 in the respective load surface element, which edge parts are normally folded down resting against each other. However, it is not necessary that edge parts 5 rest against each other if it is desired that the load surface is to define a larger width.

It is not necessary within the scope of the present invention that the load surface consists of two load surface elements, but it is also conceivable that one load surface element constitutes the entire load surface. However, in such an instance the edge parts will receive a different shape than the one described above.

In the above-described embodiments of the compound openings they comprise rectangular partial openings. However, within the scope of the present invention the partial openings do not need to have a rectangular form, which applies in particular to the larger partial openings in the compound openings. Since only the larger partial openings 10A, 11A, 12A have the task of allowing passage for stops to the clamps, it is apparent that the form of these openings can vary arbitrarily as long as they allow this passage. As concerns the smaller partial openings of a compound opening, they should generally have the form of a slit that allows the receiving of slide bar G of the quick clamp and also allows slide bar G to be able to be shifted in the longitudinal direction of the slit. However, it is not necessary that the smaller partial openings/slits have a constant width but rather it can be varied within certain limits as long as slide bar G can be shifted and this does not allow the passage of the stop present on the bottom of the load surface element.

As concerns the number of compound openings 10, 11, 12 and their placing, the number and the placing that are shown in fig. 1-3 are only exemplary. Thus, a load surface element in accordance with the present invention can comprise fewer or more compound openings than the number shown in fig. 1-3. Of course, even the placing of the compound openings can deviate from the placing shown in fig. 1-3.

## Claims

1. A load surface element intended to be mounted on load arches on a vehicle, whereby the load surface element comprises a planar bottom part (1) that is provided with openings, which bottom part (1) is provided with compound openings (10, 11, 12), and which compound openings (10, 11, 12) comprise at least two partial openings (10A, 10B, 11A, 11B, 12A, 12B) with different widths (B1, B2),
**characterized in that** at least two partial openings (11A, 12A) with the larger width (B1) are located close to a folded-up, longitudinal edge part (3) on the load surface element, that the last-cited partial openings (11A, 12A) with the larger width (B1) have the greatest extension along the folded-up, longitudinal edge part (3) and that the partial openings (11B, 12B) belonging to the last-cited partial openings (11A, 12A) and with the smaller widths (B2) have the greatest extension at right angles to the greatest extension of the partial openings (11A, 12A) with the greater widths.

2. The load surface element according to Claim 1,
**characterized in that** at least one of the compound openings (11) is L-shaped.

3. The load surface element according to Claim 1 or 2,
**characterized in that** at least one of the compound openings (12) is T-shaped.

4. The load surface element according to any one of the previous claims, **characterized in that** at least one partial opening (10A, 10B, 11A, 11B, 12A, 12B) in a compound opening (10, 11, 12) has a rectangular form.

5. The load surface element according to Claim 4,
**characterized in that** all partial openings (10A, 10B, 11A, 11B, 12A, 12B) in a compound opening (10, 11, 12) have a rectangular form.

6. The load surface element according to any one of the previous claims, **characterized in that** the widths (B1, B2) relate to one another according to: 3B2 ≤ B1 ≤ 5B2.

7. The load surface element according to any one of the previous claims, **characterized in that** the bottom part (1) comprises at least one folded-up edge (3) in the longitudinal direction of the load surface element, whereby the longitudinal direction generally coincides with the direction of travel of the vehicle.
